# EUROPEAN PATENT SPECIFICATION

(11) **EP 1 294 526 B1**
(45) Date of publication and mention of the grant of the patent: **10.12.2008**
(21) Application number: 00952286.3
(22) Date of filing: 31.07.2000
(51) Int. Cl.: B23K 9/32

(54) **WELD SPATTER REMOVAL DEVICE AND A METHOD OF REMOVIG SPATTER FROM AN ARC WELDING TORCH NOZZLE**
VORRICHTUNG UND VERFAHREN ZUR ELEKTROMAGNETISCHEN SPRITZENTFERNUNG EINER SCHWEISSBRENNERDÜSE
DISPOSITIF DE SUPPRESSION ELECTROMAGNETIQUE DES PROJECTIONS D'UN CHALUMEAU DE SOUDURE ET PROCEDE CORRESPONDANT

(30) Priority: 01.03.2000 US 185965 P
(43) Date of publication of application: 26.03.2003
(73) Proprietor: Fronius International GmbH, 4643 Pettenbach (AT)
(72) Inventor: BAUM, Gary, S., Dimon Dale, MI 48821 (US)
(74) Representative: Secklehner, Günter
(86) International application number: PCT/US2000/020686
(87) International publication number: WO 2001/064383

(56) References cited:
- GB-A- 2 300 033
- JP-A- 63 309 379
- US-A- 4 838 287
- PATENT ABSTRACTS OF JAPAN vol. 013, no. 282 (M-843), 28 June 1989 (1989-06-28) -& JP 01 078679 A (TOYOTA MOTOR CORP), 24 March 1989 (1989-03-24)
- PATENT ABSTRACTS OF JAPAN vol. 012, no. 404 (M-757), 26 October 1988 (1988-10-26) -& JP 63 149080 A (TOYOTA MOTOR CORP), 21 June 1988 (1988-06-21)
- PATENT ABSTRACTS OF JAPAN vol. 014, no. 147 (M-0952), 20 March 1990 (1990-03-20) -& JP 02 011276 A (NIPPON STEEL WELD PROD & ENG CO LTD), 16 January 1990 (1990-01-16)

## Description

The present invention relates to a weld spatter removal device and a method of removing weld spatter which has accumulated on the nozzle of an arc welding torch according to the preamble of respectively, claims 1 and 10 (see, for example, JP 01/078679 A). More particularly, the present invention relates to an apparatus and method for removing spatter from an arc welding torch nozzle whereby a single control power unit and control logic may be used to operate multiple electromagnetic spatter removal devices.

Manufacturing operations employ various arc welding processes when creating a product. Typically, a welding electrode is placed near articles to be welded and an electrical arc is formed between the electrode and the articles, such that the articles temperature is locally raised to thereby cause the articles to melt and form a weld.

A particularly useful method of arc welding is that of a continuous electrode shielded by an inert gas. Utilizing such a technique, requires a nozzle be placed around the welding electrode, such that inert gas is directed towards the area to be welded. The shielding gas is needed to prevent the atmosphere from adversely affecting the weld. For example, the gas prevents unwanted oxidation of the parts, as well as maintains the physical properties of the welded area. When such a process is utilized, a common problem arises; weld spatter accumulates on the opening of the nozzle. Over time, this accumulation will become so great as to block the flow of shielding gas. When the flow of shielding gas is blocked, the mechanical properties of the weld will be adversely affected.

Various devices have been proposed to remove spatter from the nozzle of an arc welding torch. A method and device which has proven to be highly acceptable is the mechanism and method for electromagnetic removal of spatter on the nozzle of an arc welding torch.

In the document JP 01/078679 A, a spatter removing device for an arc welding torch is disclosed. A main coil is arranged at the tip part side of a nozzle and a sub-coil is arranged at the nozzle base end part side. Passing a current simultaneously to the main coil and to the sub-coil by operating a switch to excite both coils causes the generation of a magnetic force acting as an attraction force to a spatter. Consequently, by this attraction force the spatter is scattered in the inside of the main coil.

Such a device is also denoted in United States Patent Number 4,838,287.

One detriment of electromagnetic spatter removal devices known at the present time is that the controller of the devices is configured to control only one device at a time. For each device, a control and a power supply is needed to charge the coil of the electromagnetic spatter removal device at the appropriate time.

It has been determined, however, that in facilities where multiple-welding stations exist, such as in many manufacturing and assembly plants, a significant amount of time can exist between the electromagnetic spatter removal of one torch nozzle at one station and the required electromagnetic spatter removal of another torch at another station. These stations may also be located in such a manner that the devices carrying the welding torch may not be able to reach a central location for spatter removal. Thus, it would be desirable to utilize a device that is capable of controlling multiple spatter removal devices utilizing a single power source, thereby reducing the number of power and control units necessary and thereby reduce the overall cost associated with the spatter removal process of the individual torch nozzles.

### SUMMARY OF THE INVENTION

It is therefore, an object of the present invention to provide an apparatus and method whereby a single power and control unit may be utilized for firing multiple electromagnetic spatter removal devices.

A weld spatter removal device according to the invention is defined in claim 1.

The source of power is connected to a silicon control rectifier (SCR) which in turn is connected to a multiple contactor switch mechanism mounted in an enclosure. The multiple electromechanical contactor switch mechanism is utilized to selectively allow the passage of current to individual electromagnetic coils. The contactor switch mechanism is connected to at least two contactors, which in turn are connected to at least two electromagnetic coils, which are charged to remove weld spatter from the opening of the nozzle of an are welding torch. A control mechanism is included in the enclosure and is utilized for the selection of the appropriate contactor to be energized. The selection is determined by input from the user or customer's welding cell controller or robot.

There is also disclosed a method of removing weld spatter from an one welding torch nozzle utilizing a single control and power source according to claim 10. The method includes the steps of: (1) providing a power supply connected to a SCR, (2) providing a contactor switch mechanism with at least two switches, (3) providing a control mechanism connected to the contactor switch mechanism, (4) Providing at least two electromagnetic coils connected to at least two electromechanical contactors, (5) energizing the first switch, (6) closing the first contactor, (7) energizing the power supply, (8) opening the first switch,(9) energizing another switch,(10) closing another contactor, (11) energizing the power supply(12)opening the switch just energized.

These and other features of the present invention can best be understood from the following specification and drawings.

### BRIEF DESCRIPTION OF THE DRAWINGS

Figure 1 is a block representation of a first embodiment of the present invention.
Figure 2 is a block diagram representing the method of the first embodiment of the present invention.
Figure 3 is a block representation of a second embodiment of the present invention.
Figure 4 is a schematic representation of the circuitry of the second embodiment of the present invention.

### DETAILED DESCRIPTION OF THE PREFERRED EMBODIMENT

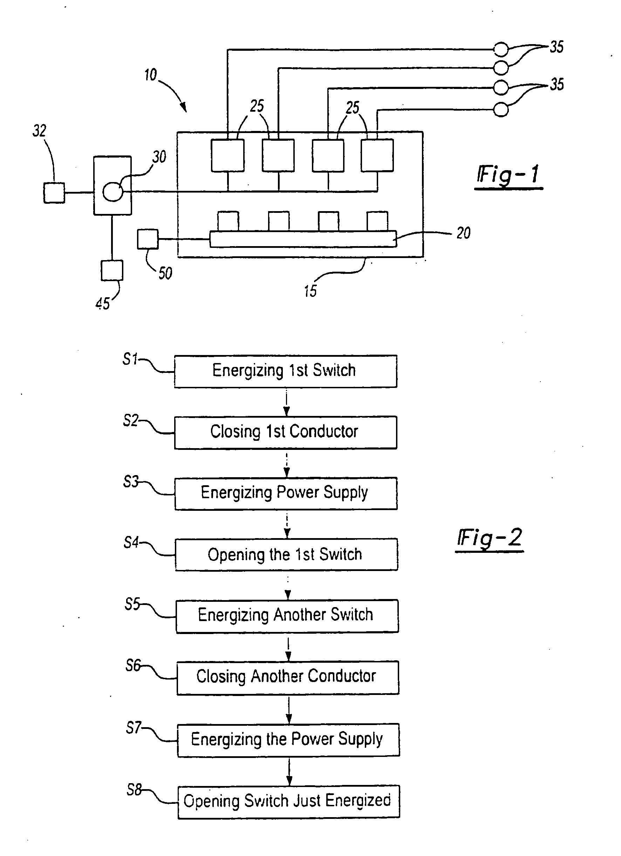

There is shown generally in Figure 1 at 10, the first embodiment of the weld spatter removal device of the present invention. The controlling circuitry of the invention is housed in an enclosure 15 to protect the circuitry from exposure to the external surroundings, as well as to provide a unitary module that may be easily installed by an end user.

Within the enclosure 15 are electromechanical contactor switches 20, and contactors 25. The first embodiment is designed to be an addition capable of integration into a single magnetic coil removal system. A single SCR 30, which may or may not be already installed is connected to an existing power supply 32 and capacitor (not shown). The SCR is also connected to the contactor switches 20. The switches are in turn connected to the contactors 25. The contactors 25 are connected to electromagnetic coils 35 which are energized to remove weld spatter from the opening of a weld torch nozzle.

There is also included in the first embodiment of the present invention a control that selects the appropriate contactor 25 to be energized, which in turn energizes a corresponding electromagnetic coil 35. The control may be from an enduser's robot 45 or from the enduser's welding cell controller 50. The control signal is preferably a 24 volt signal that is compatible with most industrial welding operations, but may be of a different variety without departing from the invention.

As shown in Figure 1, there are four contactor switches 20, four contactors 25 and four electromagnetic coils 35 connected to each other in an appropriate manner to service a corresponding number of welding stations. It is to be understood that an alternative number may be utilized by the present invention, such as, two or three. It has been determined that at numbers greater than four stations, the longevity of the capacitor decreases and the need for a faster and more complicated energizing control outweighs the benefits associated with using multiple firing weld spatter removal devices. The distance the current may travel due to the resistance of a wire is also a limiting factor as to the number of electromagnetic coils that may be used. As a matter of prudent manufacturing, it has been also determined that a numbers greater than four weld spatter removal stations, a failure in the process could cause the shut down of a large portion of a manufacturing operation, leading to a significant loss of money.

With reference to Figure 2, there is shown a block diagram disclosing a method for utilizing a single control and power source.

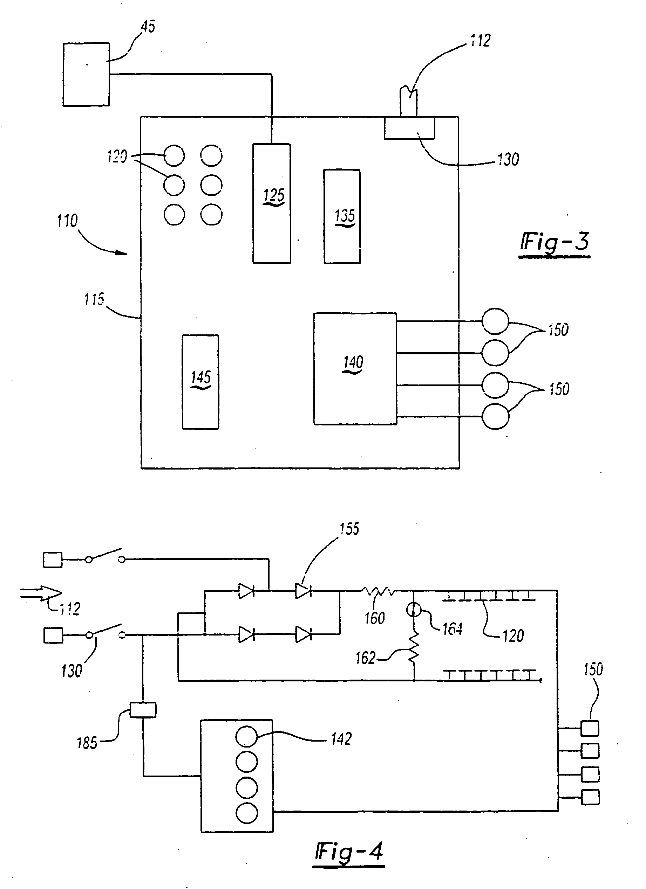

The method utilized provides a cost-efficient method of operation as large, expensive switches are not necessary to route the power to the various electromagnetic coils, as the current is sent to the SCR through a closed contactor, which only requires a small switch that is relatively inexpensive. The method as disclosed by the block diagram in Figure 3, will be described in terms of two switches, even if there are four switches utilized by the process, as only one coil can be fired at any one time; therefore, a first switch and another, representing one of either switch two, three or four will be used in the description.

As detailed in S1, a first switch is energized, then as detailed in S2 the first contactor is closed. Next, the power supply is energized as shown in S3. The first switch is then opened as representative of S4. Another switch is then energized as in S5 and another contactor is closed as in S6. The power supply is then energized as in S7 and the switch energized in S5 is opened as depicted in S8.

Utilizing this method a large switch is not required as the SCR is fired through a closed contactor, and the invention includes a contactor for each electromagnetic coil; therefore, a break does not occur when the contactor is under power, thus not requiring a large switch.

With reference to figure 3, there is shown generally in at 110, a second embodiment of the weld spatter removal device of the present invention. The controlling circuitry of the present invention is housed in an enclosure 115 to protect the circuitry from exposure to the external surroundings, as well as to provide a unitary module that may be easily installed by an end user.

Within the enclosure 115 is contained a capacitor bank 120, a firing circuit 125, a circuit breaker 130, a charger circuit 135, a SCR firing section 140 and a fan 145. The enclosure is connected to an external source of power 112 and to electromagnetic coils 150 provided at welding stations for the removal of weld spatter.

With reference to Figure 4, there is shown a schematic representation of the circuitry of the second embodiment of the present invention.

There is represented at 112, a source of power of 220 volts alternating current connected to a circuit breaker 130 for preventing short circuits or overloads. The 220 volt alternating current 112 is converted to approximately 310 volts direct current utilizing a bridge rectifier, as shown at 155. Although the current embodiment of the present invention utilizes a bridge rectifier rated at 600 volts, other voltage rectifiers may be used by the present invention.

A 125 ohm, 200 watt resistor shown at 160 is used to limit the charging current into the capacitor bank 120. A second 250 ohm, 100 watt resistor 162 is connected across the capacitor bank120 through the normally closed contacts of a relay 164. The coil of the relay 164 is connected across the 220 volt alternating current 112 line after the circuit breaker 130 such that when the circuit breaker 130 closes, the relay contacts pick. When the power is switched off, the relay 164 contacts return to their normally closed configuration and discharge the capacitor bank 120 through the second resistor 162 which is rated at 250 ohms and 100 watts. The second resistor; therefore, acts as a safety mechanism to prevent accidental shocks from occurring due to a charge stored in the capacitor bank 120 when the power is shut off. Again, the preferred embodiment of the present invention utilizes a 125 ohm, 200 watt resistor and a 250 ohm, 100 watt resistor; is to be understood that other configurations may be utilized by the present invention dependent on the required charging specifications of the capacitor bank 120, as well as the discharge time necessary when the power is turned off.

The capacitor bank 120 charges to approximately 310 volts direct current after power is applied. The capacitor bank 120 then remains charged until one of the four SCRs 142 is fired, thereby causing the SCR 142 to be discharged through one of the four electromagnetic coils 150. The electromagnetic coils are utilized to produce a magnetic field and thereby remove weld spatter from the opening of an arc welding torch nozzle.

The SCRs are triggered by a series of electrical pulses generated by a control power source 185. The series of pulses is coupled between the SCR cathode and gate by the secondary of a trigger transformer. The primary of the trigger transformer is driven by an open collector transistor which is, in turn, driven by a series of logic gates. When a "true low"electrical signal is received by the SCR trigger logic board 125 from an outside electrical source, the logic board creates a 30 kHz pulse stream that is gated into the base of the transistor for about 10 milliseconds. The pulse stream is responsible for triggering the SCRs "on". Once the capacitor bank is fully discharged, the collapse of the magnetic field in the electromagnetic coil 150 serves to turn the SCR "off".

The discharge time constant of the capacitor bank is determined by the size of the capacitors 120 utilized, as well as, the size of the electromagnetic coil 150 or inductor utilized. In a preferred embodiment, the capacitor bank is fully discharged into the coil from between 10 and 13 milliseconds.

The control mechanism of the second embodiment of the present invention includes control and logic values that are entered by an enduser, as to the number of weld stations being serviced, as well as the frequency in which a weld nozzle needs to be cleaned.

As shown in Figures 3 and 4, there are four SCRs 142 and four electromagnetic coils 150. As with the first embodiment, is to be understood that an alternative number may be utilized by the present invention, such as, two or three. Again, the reasoning for limiting the first embodiment to four electromagnetic coils applies to the second embodiment as well.

While preferred embodiments and methods are disclosed, a worker in this art would understand that various modifications would come within the scope of the invention as defined in the following claims.

## Claims

1. A weld spatter removal device (10) comprising :
an existing source of power (32);
a multiple contactor switch mechanism (20);
at least two contactors (25) connected to said multiple contactor switch mechanism (20);
at least two electromagnetic coils (35, 150) connected to the at least two contactors (25) for removing weld spatter from an arc welding torch nozzle; and
said exisiting source of power (32) providing power for said at least two electromagnetic coils (35, 150), **characterized in that**
the existing source of power (32) is connected to a silicon controlled rectifier (30);
whereby the multiple contactor switch mechanism (20) is connected to the silicon controlled rectifier (30);
and a control mechanism (45, 50) is connected to said multiple contactor switch mechanism (20) for selectively allowing passage of current, whereby said control mechanism (45, 50) selectively energizes only one of the at least two electromagnetic coils (35, 150) to remove weld spatter from said arc welding torch nozzle.

2. The weld spatter removal device (10) of Claim 1 wherein the control mechanism (45, 50) includes a control power supply (185) for emitting control signals.

3. The weld spatter removal device (10) of Claim 1 wherein the at least two contactors (25) comprises from two to four contactors (25).

4. The weld spatter removal device (10) of Claim 2, wherein the at least two electromagnetic coils (35, 150) comprises from two to four electromagnetic coils (35, 150).

5. The weld spatter removal device (10) of Claim 3, wherein the contactor switch mechanism (20) comprises from two to four switches connected to said contactors (25).

6. The weld spatter removal device (10) according to Claim 1, **characterized in that**
the multiple contactor switch mechanism (20) comprises first and second switches;
and the control mechanism (45, 50) is connected to said first and second switches;
and the at least two contactors (25) comprises first and second contactors (25);
and the at least two electromagnetic coils (35, 150) comprises first and second electromagnetic coils (35, 150).

7. The weld spatter removal device (10) according to Claim 1, **characterized in that**
the existing source of power (32) comprises an external source of power (112) connected to a circuit breaker (130);
the weld spatter removal device (10) further comprising:
a bridge rectifier (155) connected to the circuit breaker (130);
a first resistor (160) connected to the bridge rectifier (155);
a capacitor bank (120) for storing a charge connected to the first resistor (160);
a second resistor (162) connected across the capacitor bank (120) through a relay (164) for discharging the capacitor bank (120) when the power is turned off;
at least two silicon controlled rectifiers (142) connected to the capacitor bank (120);
whereby the at least two electromagnetic coils (150) are connected to the at least two silicon controlled rectifiers (142) for generating a magnetic field to remove weld spatter from an arc welding nozzle; and
whereby the control mechanism (45, 50) comprises a control logic board (125) for receiving and generating control signals to regulate the energizing of the at least two electromagnetic coils (150);
and whereby said control logic board (125) selectively discharges said capacitor bank (120) through only one of the at least two silicon controlled rectifiers (142) thereby energizing only one of said at least two electromagnetic coils (150).

8. The weld spatter removal device (10) of Claim 7 wherein the at least two silicon controlled rectifiers (142) comprises from two to four silicon controlled rectifiers (142).

9. The weld spatter removal device (10) of Claim 7 wherein the at least two electromagnetic coils (150) comprises from two to four electromagnetic coils (150).

10. A method of removing weld spatter from an arc welding torch nozzle comprising:
a. providing a power supply (32);
b. providing a multiple contactor switch mechanism (20);
c. providing a control mechanism (45, 50) connected to the multiple contactor switch mechanism (20);
d. providing at least two contactors (25) connected to the multiple contactor switch mechanism (20);
e. providing at least two electromagnetic coils (35, 150) connected to the at least two contactors (25); **characterised in that** the power supply (32) is connected to a silicon controlled rectifier (30, 142);
the switch mechanism is connected to the silicon controlled rectifier (30, 142);
and the control mechanism achieves the following steps:
f. close a first switch;
g. energize the first contactor (25);
h. energize the power to energize an electromagnetic coil (35, 150);
i. open the first switch;
j. close another switch;
k. energize another contactor (25); and
l. energize the power to energize another electromagnetic coil (35, 150).

## Patentansprüche

1. Schweißspritzerbeseitigungsvorrichtung (10), umfassend:
eine vorhandene Energiequelle (32);
einen Mehrfachkontaktgeber-Schaltmechanismus (20);
mindestens zwei Kontaktgeber (25), die mit dem Mehrfachkontaktgeber-Schaltmechanismus (20) verbunden sind;
mindestens zwei elektromagnetische Spulen (35,150), die mit den mindestens zwei Kontaktgebern (25) verbunden sind, um die Schweißspritzer von einer Lichtbogenschweißbrennerdüse zu entfernen; und
wobei die vorhandene Energiequelle (32) die Energie für die mindestens zwei elektromagnetischen Spulen (35, 150) bereitstellt,
**dadurch gekennzeichnet, dass**
die vorhandene Energiequelle (32) mit einem siliziumgesteuerten Gleichrichter (30) verbunden ist;
wobei der Mehrfachkontaktgeber-Schaltmechanismus (20) mit dem siliziumgesteuerten Gleichrichter (30) verbunden ist;
und ein Steuermechanismus (45, 50) mit dem Mehrfachkontaktgeber-Schaltmechanismus (20) verbunden ist, um wahlweise den Stromdurchgang zu ermöglichen, wobei der Steuermechanismus (45, 50) wahlweise nur eine der mindestens zwei elektromagnetischen Spulen (35, 150) erregt, um Schweißspritzer von der Lichtbogenschweißbrennerdüse zu entfernen.

2. Schweißspritzerbeseitigungsvorrichtung (10) nach Anspruch 1, wobei der Steuermechanismus (45, 50) eine Steuerenergiezuführung (185) zur Ausgabe von Steuersignalen enthält.

3. Schweißspritzerbeseitigungsvorrichtung (10) nach Anspruch 1, wobei die mindestens zwei Kontaktgeber (25) von zwei bis zu vier Kontaktgeber (25) umfassen.

4. Schweißspritzerbeseitigungsvorrichtung (10) nach Anspruch 2, wobei die mindestens zwei elektromagnetischen Spulen (35, 150) von zwei bis zu vier elektromagnetische Spulen (35, 150) umfassen.

5. Schweißspritzerbeseitigungsvorrichtung (10) nach Anspruch 3, wobei der Kontaktgeber-Schaltmechanismus (20) von zwei bis zu vier Schalter umfasst, die mit den Kontaktgebern (25) verbunden sind.

6. Schweißspritzerbeseitigungsvorrichtung (10) nach Anspruch 1, **dadurch gekennzeichnet, dass**
der Mehrfachkontaktgeber-Schaltmechanismus (20) erste und zweite Schalter umfasst;
und der Steuermechanismus (45, 50) mit den ersten und zweiten Schaltern verbunden ist;
und die mindestens zwei Kontaktgeber (25) erste und zweite Kontaktgeber (25) umfassen;
und die mindestens zwei elektromagnetischen Spulen (35, 150) erste und zweite elektromagnetische Spulen (35, 150) umfassen.

7. Schweißspritzerbeseitigungsvorrichtung (10) nach Anspruch 1, **dadurch gekennzeichnet, dass**
die vorhandene Energiequelle (32) eine äußere Energiequelle (112) umfasst, die mit einem Schaltkreisunterbrecher (130) verbunden ist;
wobei die Schweißspritzerbeseitigungsvorrichtung (10) ferner umfasst:
einen Brückengleichrichter (155), der mit dem Schaltkreisunterbrecher (130) verbunden ist;
einen ersten Widerstand (160), der mit dem Brückengleichrichter (155) verbunden ist;
eine mit dem ersten Widerstand (160) verbundene Kondensatorbatterie (120) zum Speichern einer Ladung;
einen zweiten Widerstand (162), der durch ein Relais (164) über die Kondensatorbank (120) hinweg geschaltet ist, um die Kondensatorbank (120) zu entladen, wenn die Energie abgeschaltet wird;
mindestens zwei siliziumgesteuerte Gleichrichter (142), die mit der Kondensatorbatterie (120) verbunden sind;
wobei die mindestens zwei elektromagnetischen Spulen (150) mit den mindestens zwei siliziumgesteuerten Gleichrichtern (142) verbunden sind, um ein magnetisches Feld zu erzeugen, um Schweißspritzer von einer Lichtbogenschweißdüse zu entfernen; und
wobei der Steuermechanismus (45, 50) eine Steuerlogikplatine (125) für das Empfangen und Erzeugen von Steuersignalen umfasst, um das Erregen der mindestens zwei elektromagnetischen Spulen (150) zu regulieren;
und wobei die Steuerlogikplatine (125) die Kondensatorbatterie (120) wahlweise durch nur einen der mindestens zwei siliziumgesteuerten Gleichrichter (142) entlädt, wodurch nur eine der mindestens zwei elektromagnetischen Spulen (150) erregt wird.

8. Schweißspritzerbeseitigungsvorrichtung (10) nach Anspruch 7, wobei die mindestens zwei siliziumgesteuerten Gleichrichter (142) von zwei bis zu vier siliziumgesteuerte Gleichrichter (142) umfassen.

9. Schweißspritzerbeseitigungsvorrichtung (10) nach Anspruch 7, wobei die mindestens zwei elektromagnetischen Spulen (150) von zwei bis zu vier elektromagnetische Spulen (150) umfassen.

10. Verfahren zum Beseitigen von Schweißspritzern von einer Lichtbogenschweißbrennerdüse, umfassend:
a. Bereitstellen einer Energiezuführung (32), die mit einem siliziumgesteuerten Gleichrichter (30, 142) verbunden ist;
b. Bereitstellen eines Mehrfachkontaktgeber-Schaltmechanismus (20), der mit dem siliziumgesteuerten Gleichrichter (30, 142) verbunden ist;
c. Bereitstellen eines Steuermechanismus (45, 50), der mit dem Mehrfachkontaktgeber-Schaltmechanismus (20) verbunden ist;
d. Bereitstellen von mindestens zwei Kontaktgebern (25), die mit dem Mehrfachkontaktgeber-Schaltmechanismus (20) verbunden sind;
e. Bereitstellen von mindestens zwei elektromagnetischen Spulen (35,150), die mit den mindestens zwei Kontaktgebern (25) verbunden sind; **dadurch gekennzeichnet, dass**
die Energiezuführung (32) mit einem siliziumgesteuerten Gleichrichter (30, 142) verbunden ist,
der Schaltmechanismus mit dem siliziumgesteuerten Gleichrichter (30, 142) verbunden ist und
der Steuermechanismus die folgenden Schritte ausführt:
f. Schließen eines ersten Schalters;
g. Aktivieren des ersten Kontaktgebers (25);
h. Aktivieren der Energie zum Erregen einer elektromagnetischen Spule (35, 150);
i. Öffnen des ersten Schalters;
j. Schließen eines weiteren Schalters;
k. Aktivieren eines weiteren Kontaktgebers (25); und
l. Aktivieren der Energie zum Erregen einer weiteren elektromagnetischen Spule (35, 150).

## Revendications

1. Dispositif de suppression de projections de soudure (10) comprenant:
une source de puissance existante (32);
un mécanisme de commutation de contacteurs multiples (20);
au moins deux contacteurs (25) reliés audit mécanisme de commutation de contacteurs multiples (20);
au moins deux bobines électromagnétiques (35, 150) reliées à au moins deux contacteurs (25) pour retirer les projections de soudure d'une buse de chalumeau de soudage à l'arc; et
ladite source de puissance existante (32) fournissant de la puissance auxdites au moins deux bobines électromagnétiques (35,150), **caractérisé en ce que**
la source de puissance existante (32) est connectée à un redresseur (30) commandée au silicium;
par quoi le mécanisme de commutation de contacteurs multiples (20) est connecté au redresseur commandé au silicium (30);
et un mécanisme de commande (45,50) est relié audit mécanisme de commutation de contacteurs multiples (20) pour permettre sélectivement le passage du courant, par quoi ledit mécanisme de commande (45,50) excite sélectivement seulement une d'au moins deux bobines électromagnétiques précitées (35,150) pour supprimer des projections de soudure de ladite buse de chalumeau de soudage à l'arc.

2. Dispositif de suppression de projections de soudure (10) selon la revendication 1, où le mécanisme de commande (45,50) comprend une alimentation de commande (185) pour émettre des signaux de commande.

3. Dispositif de suppression de projections de soudure (10) selon la revendication 1, où au moins deux contacteurs précités (25) comprennent de deux à quatre contacteurs (25).

4. Dispositif de suppression de projections de soudure (10) selon la revendication 2, où au moins deux bobines électromagnétiques précitées (35,150) comprennent deux à quatre bobines électromagnétiques (35,150).

5. Dispositif de suppression de projections de soudure (10) selon la revendication 3, où le mécanisme de commutation de contacteurs (20) comprend deux à quatre commutateurs connectés auxdits contacteurs (25).

6. Dispositif de suppression de projections de soudure (10) selon la revendication 1,
**caractérisé en ce que**
le mécanisme de commutation de contacteurs multiples (20) comprend des premier et deuxième commutateurs;
et le mécanisme de commande (45,50) est connecté auxdits premier et deuxième commutateurs;
et au moins deux contacteurs précités (25) comprennent des premier et deuxième contacteurs (25),
et au moins deux bobines électromagnétiques précitées (35,150) comprennent des première et deuxième bobines électromagnétiques (35,150).

7. Dispositif de suppression de projections de soudure (10) selon la revendication 1,
**caractérisé en ce que**
la source de puissance existante (32) comprend une source de puissance externe (112) connectée à un disjoncteur (130);
le dispositif de suppression de projections de soudure (10) comprenant en outre:
un redresseur en pont (155) connecté au disjoncteur (130);
une première résistance (160) connectée au redresseur en pont (155);
une batterie de condensateurs (120) pour stocker une charge connectée à la première résistance (160);
une deuxième résistance (162) connectée à la batterie de condensateurs (120) par un relais (164) pour décharger la batterie de condensateurs (120) lorsque la puissance est arrêtée;
au moins deux redresseurs au silicium (142) connectés à la batterie de condensateurs (120);
par quoi au moins deux bobines électromagnétiques (150) sont connectées à au moins deux redresseurs au silicium précités (142) pour produire un champ magnétique afin de retirer des projections de soudure d'une buse de soudage à l'arc; et
par quoi le mécanisme de commande (45,50) comprend une carte logique de commande (125) pour recevoir et produire des signaux de commande afin de réguler l'excitation des au moins deux bobines électromagnétiques (150);
et par quoi ladite carte logique de commande (125) décharge sélectivement ladite batterie de condensateurs (120) par seulement un des au moins deux redresseurs au silicium (142) en excitant ainsi seulement une desdites au moins deux bobines électromagnétiques (150).

8. Dispositif de suppression de projections de soudure (10) selon la revendication 7, où au moins deux redresseurs au silicium précités (142) comprennent deux à quatre redresseurs au silicium (142).

9. Dispositif de suppression de projections de soudure (10) selon la revendication 7, où au moins deux bobines électromagnétiques précitées (150) comprennent deux à quatre bobines électromagnétiques (150).

10. Procédé de suppression de projections de soudure d'une buse de chalumeau de soudage à l'arc comprenant les étapes consistant à:
a. réaliser une alimentation (32);
b. réaliser un mécanisme de commutation de contacteurs multiples (20);
c. réaliser un mécanisme de commande (45,50) relié au mécanisme de commutation de contacteurs multiples (20);
d. réaliser au moins deux contacteurs (25) connectés au mécanisme de commutation de contacteurs multiples (20);
e. réaliser au moins deux bobines électromagnétiques (35,150) connectées auxdits au moins deux contacteurs (25);
**caractérisé en ce que** l'alimentation (32) est connectée à un redresseur au silicium (30;142); le mécanisme de commutation est connecté au redresseur au silicium (30,142); et le mécanisme de commande réalise les étapes suivantes:
f. la fermeture d'un premier commutateur;
g. l'excitation du premier contacteur (25);
h. l'excitation de la puissance pour exciter une bobine électromagnétique (35,150);
i. l'ouverture du premier commutateur;
j. la fermeture d'un autre commutateur;
k. l'excitation d'un autre contacteur (25); et
l. l'excitation de la puissance pour exciter une autre bobine électromagnétique (35,150).
